# EUROPEAN PATENT SPECIFICATION

(11) **EP 1 279 575 B1**
(45) Date of publication and mention of the grant of the patent: **13.09.2006**
(21) Application number: 01306175.9
(22) Date of filing: 18.07.2001
(51) Int. Cl.: B60R 22/415

(54) **Retractor**
Gurtaufroller
Enrouleur automatique

(43) Date of publication of application: 29.01.2003
(73) Proprietor: KEY SAFETY SYSTEMS, INC., Sterling Heights, MI 48314 (US)
(72) Inventor: Palliser, Martyn Neil, Carlisle, Cumbria (GB)
(74) Representative: Freeman, Jacqueline Carol

(56) References cited:
- WO-A-01/30614
- US-A- 5 505 400
- US-A- 5 934 596
- US-A- 6 109 556

## Description

The current invention relates to vehicle passenger safety and in particular to seat belt retractor systems.

A seat belt retractor is a commonly used form of safety restraint in modem road vehicles. Conventional seat belt retractors allow an occupant some freedom of movement, but have sensors to detect an acceleration above a predetermined magnitude indicative of an emergency situation. The retractor then locks, arresting the occupant's movement. This can also occur when the occupant leans forward too quickly when attempting to reach a control on the dashboard. Seat belts which allow movement are desirable for adult occupants as they restrain passengers in emergency situations but are comfortable because they allow a reasonable degree of freedom for movement during normal driving conditions. However a particular issue of safety arises when transporting young children with a child seat since the child seat must be fixed but it is desirable for the retractor to also operate as a normal inertial retractor to provide the expected comfort for an adult.

This is a well known problem and several solutions have been proposed, such as US 6,109,556 which describes a safety belt arrangement for motor vehicles, specially adapted for use with a child seat to switch between a fixed mode for the child seat and an automatic mode for adults. Such a retractor is known as a Child Hold Out Mechanism (CHOM).

In US 6 109 556 the switching means comprises a cam connected to the spool via a step down gearing arrangement and a cam follower. The step down gearing arrangement comprises an inner gear ring and a gear arrangement with a drive peg located at a predetermined radius. The drive peg is arranged to move cycloidally and rotate the cam when the gear rotates. This cycloidal motion often results in the gear arrangement being known as a "wobble" gear.

Document WO 01/30614 A1 shows a retractor according to the preamble of independent claim 1.

The cam follower is pivotally mounted and arranged to be in continuous contact with the cam surface. At a predetermined rotational orientation of the cam, the cam follower urges the sensor lever into engagement with a toothed ratchet wheel fixed to the spool to lock the spool and webbing protraction.

A particular problem with CHOM retractors is that a large number of components are needed and this increases the radial packet size. The competitive seat belt retractor industry typically has low unit costs and high volume production, therefore even small savings in unit production costs due to a reduction in the number of parts, or reduction in the amount of materials required, can lead to a significant increase in profits.

Accordingly, it is an object of the current invention to provide an improved seat belt retractor.

According to the present invention there is provided a retractor comprising a spool, for carrying seat belt webbing, rotatably mounted about a longitudinal axis and biased in a webbing rewinding direction, a toothed ratchet wheel fixedly mounted to rotate with the spool, a sensor for detecting an emergency condition of the vehicle, a sensor lever responsive to the sensor to engage the ratchet wheel in the event of an emergency condition, means for locking the spool against pay-out of the webbing in response to the sensor lever engaging the ratchet wheel, the retractor being adapted to operate in a first, emergency locking, mode in which the spool is not locked and can rotate to pay-out and to rewind webbing, and in a second, automatic locking mode, in which the spool is locked against pay-out of the webbing, and means for switching between the first mode and the second mode, wherein the switching means comprises a cam connected to the spool via a step-down gearing arrangement and having a cam surface, and an actuating lever having a cam follower resiliently biased against the cam surface, the actuating lever being pivotably mounted and movable from a first position, in which it does not actuate the sensor lever and the retractor is in the first mode, against the action of the of the resilient bias, to a second position in which the actuating lever actuates the sensor lever, and the retractor is in the second mode, wherein the sensor lever and the means for switching between the first mode are and the second mode both being located radically between the spool and the sensor.

This enables a retractor with a smaller overall packet size to be made.

Preferably the sensor lever is the only lever arranged to engage the ratchet wheel. This allows a relatively substantial reduction in package size over known retractors of this type which use additional levers to engage the ratchet.

Advantageously, the cam surface comprises an indentation including a ramp and a step, substantially radial to the cam surface for engaging the actuation lever. The lever has a relatively smaller contact area with the cam surface of the cam when not in engagement with the indentation in the cam surface than when in engagement with the indentation in the cam surface.

In one embodiment the step-down gearing is a cycloidal gear system commonly known in this field as a wobble gear. However other step-down gearing can be used.

The vehicle acceleration sensor may be a standing man sensor arranged to detect vehicle accelerations / decelerations above a predetermined magnitude and upon detection of said accelerations / decelerations to bias the sensor lever against at least one tooth on the ratchet wheel.

In one embodiment the vehicle acceleration sensor lever can move freely about a pivot point on a mounting member when the retractor is functioning in the first mode of operation.

In another embodiment one portion of the sensor lever is arranged to co-operate with the sensor and another portion is arranged for engagement with the ratchet wheel. The pivot point of the sensor lever is located between each of said portions and preferably the sensor lever is pivoted substantially about its centre.

Preferably, the amount of webbing which must be pulled from the spool to switch the retractor from the first mode of operation to the second mode of operation is substantially the full amount of webbing, and the amount of webbing which must be retracted onto the spool to switch the retractor from the second mode operation to the first mode of operation is substantially the full amount of webbing.

In order that the invention may be clearly understood and readily carried into effect, a preferred embodiment will now be described, by way of example, with reference to the accompanying drawings, in which:
Fig. 1 is a partially exploded perspective view of a retractor according to the invention.
Fig. 2 is a partially cut away side elevation of the retractor of Fig. 1 with a part removed to more clearly show other components.
Figs. 3 to 6 are side elevations of the retractor of Figs. 1 and 2 in a first mode of operation at various stages of webbing withdrawal.
Figs. 7, 9 and 10 are side elevations of the retractor of Figs. 1 and 2 in a second mode of operation at various stages of webbing retraction.
Fig. 8 is an enlarged view of part of the retractor of Fig. 7.
Fig. 11 is a side elevation of the retractor of Figs. 1 and 2 returned to the first mode of operation.

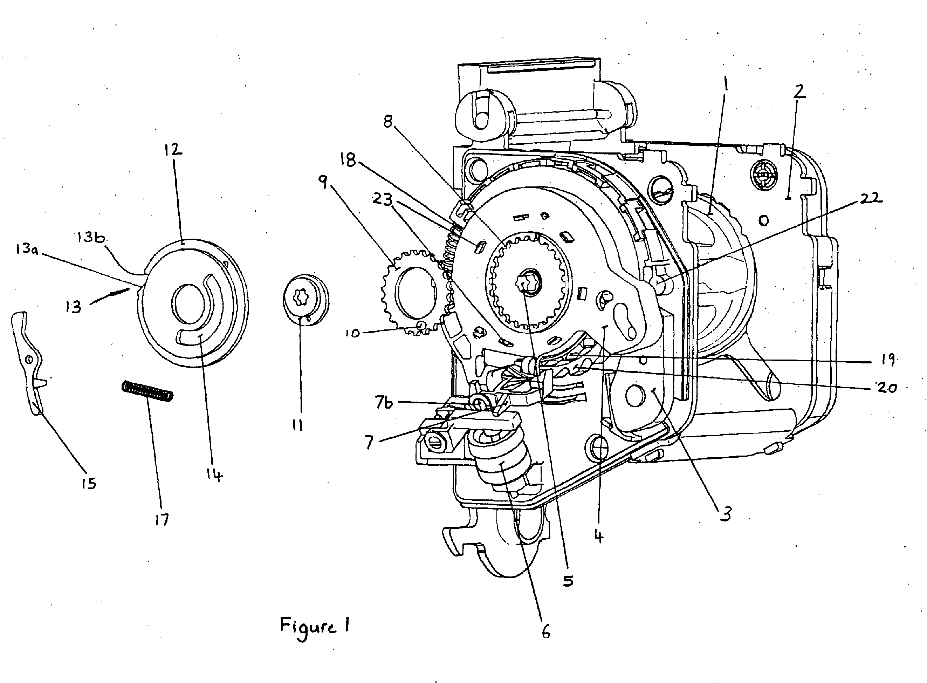

In Fig. 1 a vehicle seat belt retractor is shown with the seat belt webbing substantially fully protracted from a spool 1 mounted in a frame 2. Thus the individual parts of the mechanism can be more clearly seen. Like reference signs are used throughout the figures and the parts comprise a lock bar 3, a pivotable mounting member 4, an eccentric cam drive 5, a vehicle acceleration sensor 6, a vehicle acceleration sensor lever 7 pivotable about a pivot point 7b, an inner gear ring 8, a wobble gear arrangement 9, a pin 10, an eccentric cam 11, an actuation cam 12, an indentation 13 comprising a ramp 13a and a step 13b in the cam surface of the actuation cam 12, a window 14, an actuation lever 15, an actuation lever pivot 16, an actuation lever spring 17, a mounting member spring 18, a ratchet wheel 19, a lock gear 20, a fixed mounting member 22 and mounting lugs 23.

The retractor of the figures operates in two distinct modes: a first, Emergency Locking Retractor (ELR), mode and a second, Automatic Locking Retractor (ALR), mode. In ELR mode webbing 21 can be wound onto the spool 1 and pulled from the spool 1. This allows the vehicle occupant to move freely to, for example, adjust a radio or a control on a vehicle dashboard. Sudden movements however, which have an acceleration greater than a predetermined magnitude, for example caused by a sharp vehicle deceleration, cause the retractor to lock. This prevents further pay-out of the webbing 21 and restrains the vehicle occupant. Most vehicle occupants use the retractor in ELR mode.

In ALR mode webbing 21 can be retracted on to the spool 1 but not pulled from the spool 1. This mode is used when restraining a child seat in a vehicle.

To switch to ALR mode, a predetermined amount of webbing 21 is pulled from the spool 1. This activates a mechanism which locks the spool against further pay-out of webbing 21.

Usually this switching occurs when substantially the whole of the webbing 21 is retracted, i.e. is wound on to the spool 1. The spool 1 is biased in the retraction direction of the webbing 21.

In Fig. 1 a partially exploded view of the retractor is shown without webbing 21. This clearly shows the inner gear ring 8, the eccentric cam drive 5, the wobble gear 9, the pin 10 located on the wobble gear 9, the eccentric cam 11, the actuation cam 12 with the window 14 cut through the actuation cam 12, and the actuation lever 15.

The window 14 consists of a concentric arcuate slot cut through the face of the actuation cam 12 and having an inner wall and an outer wall at respective predetermined radii from the centre of the cam, and each having a predetermined arcuate length. In the particular embodiment shown the arcuate slot extends through an angle of just less than 180 degrees.

Pin 10 is located at a predetermined radius on the wobble gear 9.

The position of the pin 10 within the window 14 is determined by the amount of webbing 21 which has been pulled from the spool 1.

The actuation lever 15 is pivotally attached to the pivotable mounting member 4 at the pivot point 16. One portion of the actuation lever 15 is biased towards the cam surface of actuation cam 12 by the actuation lever spring 17. In the embodiment shown in the actuation lever spring 17 is a helical spring in compression and causes the actuation lever 15 to remain in contact with the cam surface of the actuation cam 12 irrespective of the rotational orientation of actuation cam 12.

A mounting member 22 is fixedly attached to frame 2. The fixed mounting member 22 can be made from a plastics material and the frame 2 can be made from metal.

The vehicle acceleration sensor lever 7 is pivotally mounted to the pivotable mounting member 4 at pivot point 7b. The vehicle acceleration sensor 6 which is a standing man sensor well known in the art is also mounted on the pivotable mounting member 4. The vehicle acceleration sensor 6 may take other forms. The internal gear ring 8 is fixedly mounted to the pivotable mounting member 4. The eccentric cam drive 5, the eccentric cam 11, the wobble gear 9 and the actuation cam 12 can all move relative to the pivotable mounting member 4.

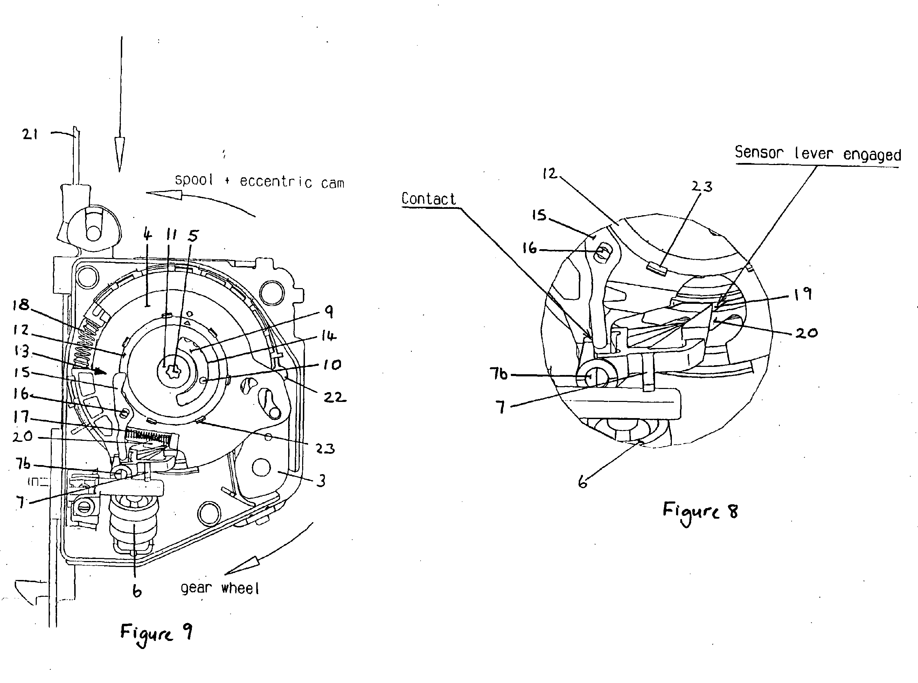

Fixedly mounted to the eccentric cam drive 5 is a ratchet wheel 19 and lock gear 20 (see Fig. 8). The vehicle acceleration sensor 6 detects accelerations/decelerations above a predetermined magnitude. When acceleration/decelerations are below the predetermined magnitude, the vehicle acceleration sensor lever 7, pivotable about pivot point 7b, is not engaged with ratchet wheel 19. This allows rotation of the spool 1 and hence eccentric cam 5, ratchet wheel 19 and lock gear 20, in both webbing 21 extraction and retraction directions. When the vehicle acceleration sensor 6 detects accelerations/decelerations above a predetermined magnitude the vehicle acceleration sensor lever 7 pivots about pivot point 7b and engages with at least one tooth on the ratchet wheel 19. Any further rotation of the spool 1, and hence the eccentric cam drive 5, the ratchet wheel 19 and the lock gear 20, in the direction of webbing 21 pay-out, is communicated by vehicle acceleration sensor lever 7 to the pivotable mounting member 4 causing it to rotate in the same direction as the spool 1, compressing the mounting member spring 18, and causing the lock bar 3, which is pivotally mounted on the frame 2, to engage with the lock gear 20, fully arresting the rotation of the spool. This happens during vehicle collisions and when occupants pull too sharply on the seat belt webbing 21.

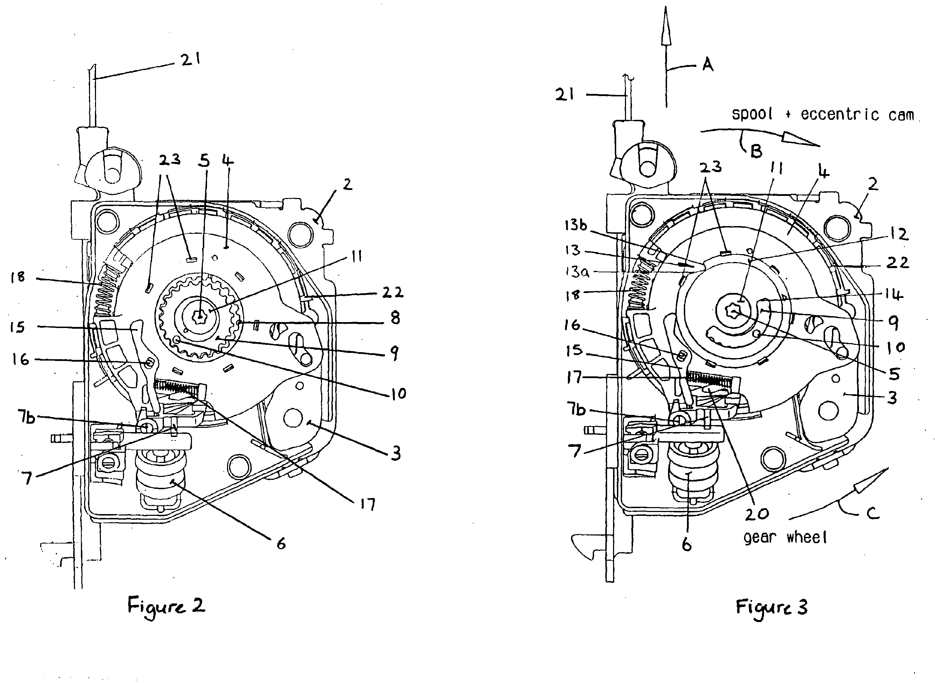

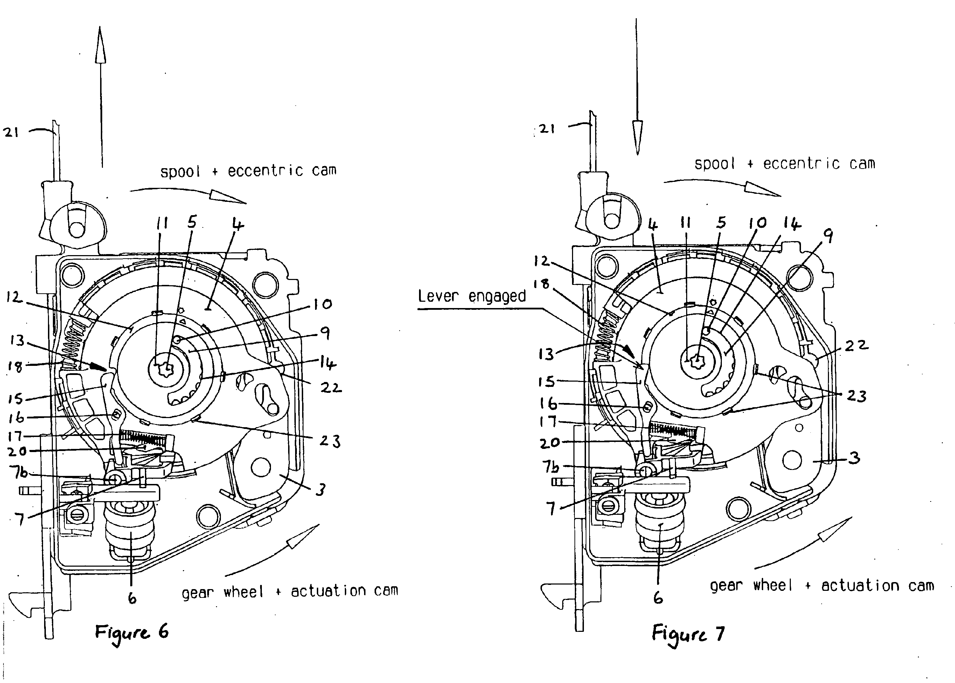

Figs. 3 to 11 illustrate the operation of the retractor as it switches from ELR mode (Figs. 3 to 6) into ALR mode (Figs. 7 to 10), and back to ELR mode (Fig. 11).

Fig. 3 shows webbing 21 being pulled from the spool 1 upwards, in the direction of arrow A. The spool 1, eccentric cam drive 5 and eccentric cam 11 are shown rotating in the direction of arrow B (clockwise). Wobble gear 9 is rotating anticlockwise as shown by arrow C, in the opposite direction to the spool 1. The actuation cam 12 is stationary because protrusion 10 on wobble gear 9 is moving through the window 14 and is not in contact with either end of window 14. Actuation cam 12 only rotates when pin 10 is abutting one end of the window 14 and the wobble gear 9 is rotating: there is no contact between the actuation lever 15 and the vehicle acceleration sensor lever 7 nor between the vehicle acceleration sensor lever 7 and the ratchet wheel 19. The vehicle acceleration sensor lever 7 is free to move about pivot 7b and the ratchet wheel 19 rotates clockwise in the same direction as spool 1 shown by arrow B. The actuation lever 15 is in contact with the cam surface of the actuation cam 12 but is not in engagement with the indentation 13.

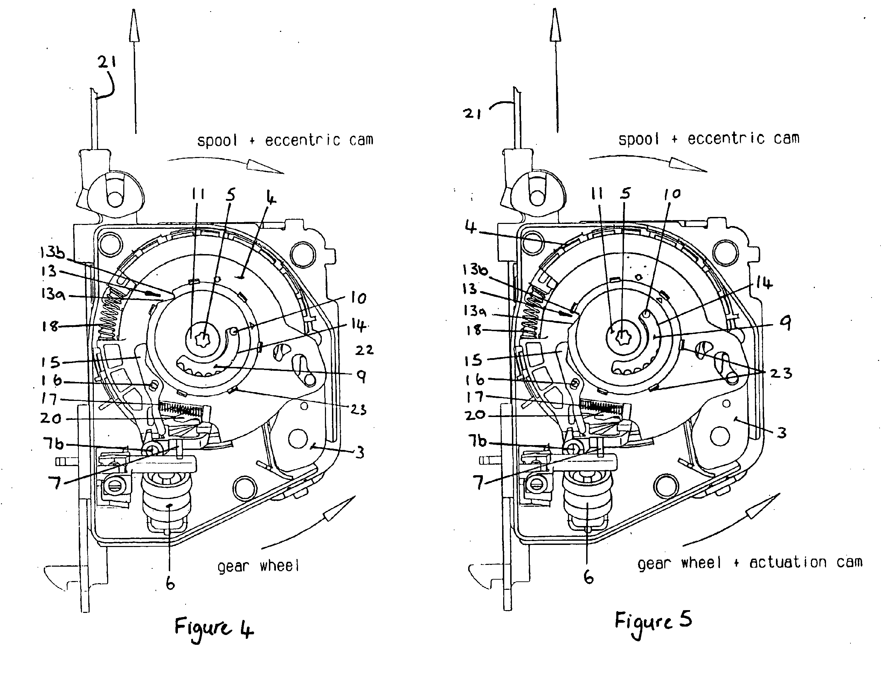

In Fig. 4 the webbing has been protracted further and the pin 10 has just come into contact with the end of window 14. The actuation cam 12 has not yet begun to rotate.

Fig. 5 shows the retractor slightly later where the actuation cam 12 is also now rotating in an anti-clockwise direction, and is being driven by pin 10. One portion of the actuation lever 15 is in contact with the cam surface of the actuation cam 12. The Actuation lever 15 is not yet engaged with indentation 13 and there is no contact between the actuation lever 15 and the vehicle acceleration sensor lever 7 nor between the vehicle acceleration sensor lever 7 and the ratchet wheel 19.

Fig. 6 shows the retractor in a condition where a portion of actuation lever 15 has moved partway down ramp 13a. The distance between actuation lever 15 and vehicle acceleration sensor lever 7 has reduced but there is no contact between them. Vehicle acceleration sensor lever 7 can move freely about pivot 7b.

Fig. 7 shows the upper end of the actuation lever 15 fully engaged with indentation 13 on the cam surface of the actuation cam 12 and abutting step 13b. The lower end of the actuation lever 15 contacts the vehicle acceleration sensor lever 7 and biases it into engagement with at least one tooth on ratchet wheel 19. This couples pivotable mounting member 4 with the spool 1. Further webbing 21 pay-out from the spool 1 is prevented because the pivotable mounting member 4 rotates a few degrees in the webbing pay-out direction and urges the lock bar 3 into engagement with the lock gear 20, fully arresting the spool 1 rotation. The retractor has switched from ELR mode to ALR mode, and there is almost no webbing left on the spool. At this point webbing can only be put back onto the spool because it can only rotate anticlockwise.

Fig. 8 is an enlarged view of the sensor mechanism of the retractor which more clearly shows the relative positions of the vehicle acceleration sensor lever 7, the actuation lever 15 and the vehicle acceleration sensor lever 7 to the ratchet wheel 19 when functioning in Automatic Locking Retractor mode, The actuation lever 15 is in contact with the vehicle acceleration sensor lever 7 which is therefore biased towards the ratchet wheel 19 and fully engaged with a tooth on the ratchet wheel 19.

Fig. 9 shows ALR mode with webbing 21 being pulled back on to spool 1 in the direction of arrow D (the spool 1 is biased in this direction of winding webbing 21 on to spool 1).

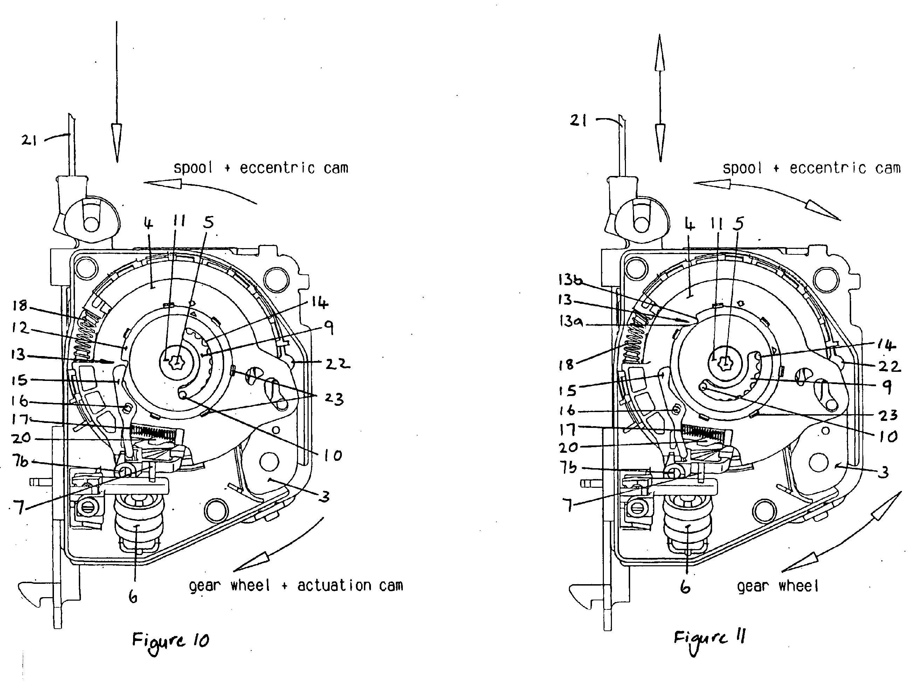

Fig. 10 shows the condition when the retractor is switching from ALR mode back to ELR mode. Webbing is being wound onto the spool (it cannot be pulled off the spool because the sensor lever 7 is still engaged). The spool 1 and the eccentric cam 5 therefore only rotate anticlockwise and the wobble gear 9 and the actuation cam 12 rotate in the opposite direction. The actuation cam 12 is driven by pin 10 which abuts one end of the window 14. As the actuation cam 12 rotates the actuation lever 15 partially disengages with indentation 13 on the cam surface of the actuation cam 12 and the actuation lever 15 moves up ramp 1 3a, away from step 13b. The actuation lever 15 pivots, about pivot point 16, as it slides up the ramp 13a causing the actuation lever 15 to lose contact with the vehicle acceleration sensor lever 7. Thus the bias of vehicle acceleration sensor lever 7 looses contact with the ratchet wheel 19.

Fig. 11 shows the retractor returned to Emergency Locking Retractor mode. The Actuation lever 15 has fully disengaged from indentation 13 and is not in contact with the vehicle acceleration sensor lever 7 which is now fully disengaged from the ratchet wheel 19 and can move freely about pivot point 7b so that the webbing 21 may be wound on to or pulled from spool 1 because the relevant parts can move in both directions..

A particular advantage of this retractor arrangement is that the vehicle acceleration sensor lever 7 performs two functions: it locks the retractor when vehicle acceleration sensor 6 detects accelerations / decelerations greater than a predetermined magnitude and it also prevents rotation of the spool 1 in the webbing 21 pay-out direction when operating in Automatic Locking Retractor mode. Therefore a separate component is not required to perform one of these functions, leading to a reduction in the number of parts required. Also, the size, position and orientation of the actuation lever 15 in relation to the vehicle acceleration sensor lever 7 reduces the radial package size of the retractor, and hence provides for a more compact retractor. This arrangement can lead to significant savings in unit production costs.

## Claims

1. A retractor comprising a spool (1), for carrying seat belt webbing (21), rotatably mounted about a longitudinal axis and biased in a webbing (21) rewinding direction, a toothed ratchet wheel (19) fixedly mounted to rotate with the spool (1), a sensor (6) for detecting an emergency condition of the vehicle, a sensor lever (7) responsive to the sensor (6) to engage the ratchet wheel (19) in the event of an emergency condition, means for locking the spool (1) against payout of the webbing (21) in response to the sensor lever (7) engaging the ratchet wheel (19), the retractor being adapted to operate in a first, emergency locking, mode in which the spool (1) is not locked and can rotate to pay-out and to rewind webbing (21), and in a second, automatic locking mode, in which the spool (1) is locked against pay-out of the webbing (21), and means for switching between the first mode and the second mode, wherein the switching means comprises a cam (11) connected to the spool (1) via a step-down gearing arrangement (8, 9) and having a cam surface (12), and an actuating lever (15) having a cam follower resiliently biased against the cam surface (12), the actuating lever (15) being pivotally mounted and movable from a first position, in which the actuating lever (15) does not actuate the sensor lever (7) and the retractor is in the first mode, against the action of the resilient bias (17), to a second position in which the actuating lever (15) actuates the sensor lever (7), and the retractor is in the second mode, **characterized in that** the sensor lever (7) and the means for switching between the first mode and the second mode are both located radially between the spool (1) and the sensor (6).

2. A retractor according to claim 1 wherein the sensor lever (7) is the only lever arranged to engage the ratchet wheel (19).

3. A retractor according to any one of claims 1 and 2 wherein the cam surface (12) includes an indentation (13) and a step (13b), substantially radial to the cam surface (12), for engaging the actuation lever (15) during switching between the first mode and the second mode.

4. A retractor according to any one of the preceding claims wherein the cam follower is shaped so that it has a smaller surface contact area with the cam surface (12) when not engaged in the indentation (13) and a larger surface contact area with the cam surface (12) when engaged with the indentation (13).

5. A retractor according to any one of the preceding claims wherein the sensor lever (7) is arranged to pivot about a pivot point (7b) on a mounting member (4) when the retractor is functioning in the first mode of operation.

6. A retractor according to any one of the preceding claims wherein one portion of the sensor lever (7) is arranged to co-operate with the sensor (6) and another portion is arranged for engagement with the ratchet wheel (19) and wherein the actuating lever (15) is pivotally mounted above the sensor lever (7) such that the actuating lever (15) engages the sensor lever (7) between such portions of the sensor lever (7) to cause the sensor lever (7) to pivot and engage the ratchet wheel (19).

7. A retractor according to claim 6 wherein the sensor lever (7) is pivoted substantially about its centre.

8. A retractor according to any one of the preceding claims wherein the step-down gearing (8,9) is a cycloidal system comprising an eccentric cam (11).

## Patentansprüche

1. Gurtaufroller, umfassend: eine Wickelwelle (1), zum Transport des Gurtbandes (21) des Sicherheitsgurtes, die um eine Längsachse drehbar und in einer Aufwickelrichtung des Gurtbandes (21) vorgespannt angebracht ist; ein gezahntes Klinkenrad (19), das fest montiert ist, um sich mit der Wickelwelle (1) zu drehen; einen Sensor (6) zum Erkennen eines Notzustandes des Fahrzeuges; einen Sensorhebel (7), der auf den Sensor (6) reagiert, um das Klinkenrad (19) im Falle eines Notzustandes in Eingriff zu bringen; Mittel, um die Wickelwelle (1) als Reaktion auf den Sensorhebel (7), der in das Klinkenrad (19) eingreift, gegen das Ablaufen des Gurtbandes (21) zu blockieren, wobei der Gurtroller dafür ausgelegt ist, in einem ersten Notblockier-Modus, in dem die Wickelwelle (1) nicht blockiert ist und sich zum Ablaufen und zum Aufwickeln des Gurtbandes (21) drehen kann, und in einem zweiten, automatischen Blockiermodus, in dem die Wickelwelle (1) gegen das Ablaufen des Gurtbandes (21) blockiert ist, betrieben zu werden; und Mittel zum Umschalten zwischen dem ersten Modus und dem zweiten Modus, wobei die Umschaltmittel einen Nocken (11), der mit der Wickelwelle (1) über eine Untersetzungsgetriebeanordnung (8, 9) verbunden ist und eine Nockenfläche (12) aufweist, und einen Betätigungshebel (15) umfassen, der einen Nockenstößel aufweist, der gegen die Nockenfläche (12) federnd vorgespannt ist, wobei der Betätigungshebel (15) schwenkbar angeordnet ist und sich von einer ersten Position, in der der Betätigungshebel (15) den Sensorhebel (7) nicht betätigt und der Gurtroller sich im ersten Modus befindet, gegen die Wirkung der federnden Vorspannung (17), zu einer zweiten Position bewegen lässt, in der der Betätigungshebel (15) den Sensorhebel (7) betätigt und der Gurtroller sich im zweiten Modus befindet, **dadurch gekennzeichnet, dass** sowohl der Sensorhebel (7) als auch die Mittel zum Umschalten zwischen dem ersten Modus und dem zweiten Modus in der Radialrichtung zwischen der Wickelwelle (1) und dem Sensor (6) angeordnet sind.

2. Gurtaufroller nach Anspruch 1, bei dem der Sensorhebel (7) der einzige, für den Eingriff in das Klinkenrad (19) angeordnete Hebel ist.

3. Gurtaufroller nach einem der Ansprüche 1 und 2, bei dem die Nockenfläche (12) eine Einkerbung (13) und einen Absatz (13b), im Wesentlichen radial zur Nockenfläche (12), umfasst, um den Betätigungshebel (15) während des Umschaltens zwischen dem ersten Modus und dem zweiten Modus in Eingriff zu bringen.

4. Gurtaufroller nach einem der vorhergehenden Ansprüche, bei dem der Nockenstößel so geformt ist, dass er eine kleinere Oberflächenkontaktfläche mit der Nockenfläche (12) aufweist, wenn er nicht in die Einkerbung (13) eingreift, und er eine größere Oberflächenkontaktfläche mit der Nockenfläche (12) aufweist, wenn er in die Einkerbung (13) eingreift.

5. Gurtaufroller nach einem der vorhergehenden Ansprüche, bei dem der Sensorhebel (7) so angeordnet ist, dass er sich um einen Drehpunkt (7b) an einem Befestigungselement (4) dreht, wenn der Gurtroller im ersten Betriebsmodus arbeitet.

6. Gurtaufroller nach einem der vorhergehenden Ansprüche, bei dem ein Teil des Sensorhebels (7) angeordnet ist, um mit dem Sensor (6) zusammenzuwirken und ein anderer Teil für den Eingriff in das Klinkenrad (19) angeordnet ist und bei dem der Betätigungshebel (15) über dem Sensorhebel (7) so schwenkbar angeordnet ist, dass der Betätigungshebel (15) am Sensorhebel (7) zwischen solchen Teilen des Sensorhebels (7) in Eingriff gebracht wird, um zu bewirken, dass der Sensorhebel (7) sich dreht und in das Klinkenrad (19) eingreift.

7. Gurtaufroller nach Anspruch 6, bei dem sich der Sensorhebel (7) im Wesentlichen um seinen Mittelpunkt dreht.

8. Gurtaufroller nach einem der vorhergehenden Ansprüche, bei dem das Untersetzungsgetriebe (8, 9) ein Zykloidensystem ist, das einen Exzenternocken (11) umfasst.

## Revendications

1. Enrouleur comprenant une bobine (1), destinée à transporter la sangle (21) de la ceinture de sécurité, montée pour une rotation autour d'un axe longitudinal et poussée dans une direction d'enroulement de la sangle (21), une roue dentée à rochet (19) à montage fixe en vue d'une rotation avec la bobine (1), un capteur (6) destiné à détecter un état d'urgence du véhicule, un levier du capteur (7) réagissant au capteur (6) pour engager la roue à rochet (19) dans un état d'urgence du véhicule, un moyen pour bloquer la bobine (1) contre un déroulement de la sangle (21) en réponse à l'engagement du levier du capteur (7) dans la roue à rochet (19), l'enrouleur étant destiné à fonctionner dans un premier mode à blocage d'urgence, dans lequel la bobine (1) n'est pas bloquée et peut tourner pour dérouler et enrouler la sangle (21), et dans un deuxième mode à blocage automatique, dans lequel la bobine (1) est bloquée contre un déroulement de la sangle (21), et un moyen de commutation entre le premier mode et le deuxième mode, le moyen de commutation comprenant une came (11) connectée à la bobine (1) par un dispositif d'engrenage réducteur (8, 9) et comportant une surface à came (12), et un levier d'actionnement (15) comportant un galet de came poussé de manière élastique contre la surface à came (12), le levier d'actionnement (15) étant monté pour un pivotement et pouvant être déplacé d'une première position, dans laquelle le levier d'actionnement (15) n'actionne pas le levier du capteur (7) et l'enrouleur se trouvant dans le premier mode, contre l'action de la poussée élastique (17), vers une deuxième position, dans laquelle le levier d'actionnement (15) actionne le levier du capteur (7), l'enrouleur se trouvant dans le deuxième mode, **caractérisé en ce que** le levier du capteur (7) et le moyen de commutation entre le premier mode et le deuxième mode sont tous les deux agencés radialement entre la bobine (1) et le capteur (6).

2. Enrouleur selon la revendication 1, dans lequel le levier du capteur (7) constitue le seul levier destiné à s'engager dans la roue à rochet (19).

3. Enrouleur selon l'une quelconque des revendications 1 ou 2, dans lequel la surface à came (12) englobe une entaille (13) et un gradin (13b), à agencement pratiquement radial par rapport à la surface à came (12), en vue d'un engagement dans le levier d'actionnement (15) au cours de la commutation entre le premier mode et le deuxième mode.

4. Enrouleur selon l'une quelconque des revendications précédentes, dans lequel le galet de came est formé de sorte à avoir une surface de contact plus petite avec la surface à came (12) lorsqu'il n'est pas engagé dans l'entaille (13) et une surface de contact plus grande avec la surface à came (12) lorsqu'il est engagé dans l'entaille (13).

5. Enrouleur selon l'une quelconque des revendications précédentes, dans lequel le levier du capteur (7) est destiné à pivoter autour d'un point de pivotement (7b) sur un élément de montage (4) lorsque l'enrouleur fonctionne dans le premier mode opérationnel.

6. Enrouleur selon l'une quelconque des revendications précédentes, dans lequel une partie du levier du capteur (7) est arrangée à coopérer avec le capteur (6), l'autre partie étant arrangée à s'engager dans la roue à rochet (19), le d'actionnement (15) étant monté pour un pivotement au-dessus du levier du capteur (7) de sorte que le levier d'actionnement (15) engage le levier du capteur (7) entre ces parties du levier du capteur (7) en vue d'entraîner le pivotement du levier du capteur (7) et son engagement dans la roue à rochet (19).

7. Enrouleur selon la revendication 6, dans lequel le levier du capteur (7) est pratiquement pivoté autour de son centre.

8. Enrouleur selon l'une quelconque des revendications précédentes, dans lequel l'engrenage réducteur (8, 9) est un système cycloïdal comprenant une came excentrique (11).
